# EUROPÄISCHE PATENTSCHRIFT

(11) **EP 0 571 835 B1**
(45) Veröffentlichungstag und Bekanntmachung des Hinweises auf die Patenterteilung: **11.10.1995**
(21) Anmeldenummer: 93107853.9
(22) Anmeldetag: 14.05.1993
(51) Int. Cl.: A61G 5/10, B60G 3/01

(54) **Federanordnung für einen Rollstuhl**
Spring arrangement for wheelchair
Arrangement de ressorts pour chaise roulante

(30) Priorität: 27.05.1992 DE 4217536
(43) Veröffentlichungstag der Anmeldung: 01.12.1993
(73) Patentinhaber: Elastogran GmbH, D-49448 Lemförde (DE)
(72) Erfinder: Hoehner, Peter, W-2844 Stemshorn (DE); Dultmeyer, Josef, W-2841 Steinfeld (DE); Wahle, Michael, Dr., W-6706 Wachenheim (DE)
(74) Vertreter: Karau, Wolfgang, Dr.

(56) Entgegenhaltungen:
- GB-A- 2 200 189
- US-A- 4 679 811

## Beschreibung

Die Erfindung betrifft eine Federanordnung für einen Rollstuhl, bestehend aus einem Federelement, welches einerseits über eine Stütze mit dem Rahmen des Rollstuhls und andererseits über eine Lagerstütze mit der Radachse in Verbindung steht.

Aus der DE-A-37 39 216 ist eine Stoßdämpferanordnung für Rollstühle bekannt, bei der ein vertikal beweglich geführter Schieber zur Aufnahme der Radachse über ein oberes und ein unteres Federteil mit einer oberen und unteren, an einem Seitenrahmen des Rollstuhls befestigten Stütze verbunden ist. Je nach Bewegungsrichtung wird das obere oder untere Federteil zusammengedrückt.

Die für die Stoßdampferanordnung notwendige Seitenrahmenkonstruktion führt zu einer breiteren Radspur gegenüber einem ungefederten Rollstuhl, ein Nachteil beim Durchfahren von Engstellen, wie Türen oder Passagen. Ferner stellt die offene Bauweise eine Gefahrenquelle für Handverletzungen dar.

Es war daher die Aufgabe zu lösen, eine gekapselte Federanordnung für einen Rollstuhl zu entwickeln, durch deren Einbau die äußeren Abmessungen des Rollstuhls nicht geändert zu werden brauchen.

Die Aufgabe wurde durch eine Federanordnung der eingangs geschilderten Art gelöst, bei der erfindungsgemäß sowohl die rahmenseitige Stütze als auch die achslagerseitige Stütze rohrförmige Teile und wie auch das Federelement koaxial zu einer an Rahmenschenkeln befestigten Führungsstange angeordnet sind, wobei die lagerseitige Stütze axial beweglich und durch formschlüssige Verbindung mit der Führungsstange drehunbeweglich ist und die übereinander angeordneten Stützen das in einer topfförmigen Erweiterung der rahmenseitigen Stütze aufgenommene Federelement einschließen.

Weitere Einzelheiten und Vorteile der Federanordnung nach der Erfindung sind in der nachfolgenden Beschreibung eines in der Zeichnung schematisch dargestellten Ausführungsbeispiels enthalten.

Es zeigen
- Figur 1: die Federanordnung in einem Längsschnitt
- Figur 2: die Federanordnung in einem Querschnitt entlang der Schnittlinie A-A in Figur 1.

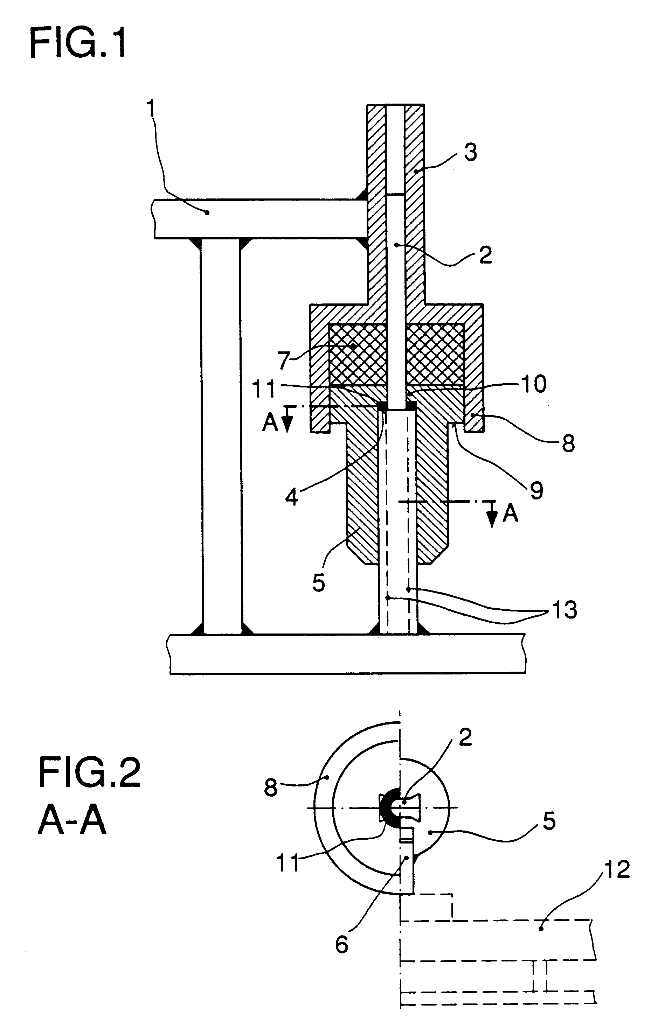

An vorhandenen Rahmenschenkeln oder -teilen 1 (Figur 1) des Rollstuhls ist in lotrechter Lage eine Führungsstange 2 an ihrem oberen Ende unter Zwischenlage eines Stützrohrs 3 und unteren Ende unmittelbar befestigt. Die Führungsstange ist an einer Abstufung 4 in einen oberen Teil mit dem umgebendenden Stützrohr 3 und einen unteren Teil mit einem nicht kreisrunden oder unterbrochenem runden Querschnitt, beispielsweise ovalem oder achsparallele Nuten oder Vorsprünge aufweisenden rundem oder vierkantigem Querschnitt 13 (Figur 2) unterteilt. Koaxial zum unteren Teil ist ein zweites axial verschiebliches Stützrohr 5 mit angepaßtem inneren Profil angeordnet, in welchem das Lager 6 für die Radachse aufgenommen ist. Die übereinander stehenden Stützrohre 3 und 5 schließen ein ebenfalls koaxial angeordnetes Elastomerteil 7 als Federelement ein, das von einer topfförmigen Erweiterung 8 des Stützrohres 3 umschlossen ist. Diese übergreift dabei teleskopartig das lagerseitige Stützrohr 5 an einem äußeren, umlaufenden Vorsprung 9, so daß das Federelement nach außen abgeschlossen ist.

Das Stützrohr 5 weist über der Abstufung 4 der Führungsstange 2 einen inneren, die Stufe übergreifenden Vorsprung 10 auf, der mit der Stufe einen elastischen Ring 11 einschließt, so daß ein federnder Anschlag gebildet ist.

Als Federwerkstoff kommen Elastomere, wie Gummi oder geschäumte Kunststoffe, vorzugsweise jedoch ein zelliges Polyurethan-Elastomer in Betracht. Mit diesem Material ist es möglich, durch Anpassung der gekapselten Feder und der Dichte des Federmaterials, vorgegebene Kennlinien zu realisieren. Zusätzlich können bei dieser Bauweise hohe spezifische Kräfte aufgenommen werden. Beispielsweise kann eine progressive Kennlinie mit hinreichender Dämpfung eingestellt werden, wodurch die Fahrstabilität und das Fahrverhalten gegenüber der Verwendung von Federn mit annähernd linearer Kennlinie deutlich verbessert wird.

Bei einem Stoß auf die beiden Hinterräder 12 des Rollstuhls wird das elastomere Federteil 7 der auf beiden Seiten eingebauten Federanordnung zusammengedrückt und damit der Stoß weitgehend abgefangen. Bei der Rückfederung wird die Abwärtsbewegung des achslagerseitigen Stützrohrs 5 vom elastischen Anschlag 11 abgefangen. Durch das Profil von Führungsstange 2 im unteren Teil und Stützrohr 5 werden dabei Drehbewegungen infolge der Radkräfte und -momente verhindert.

Die vorstehend beschriebene Konstruktion der erfindungsgemäß vorgeschlagenen Federanordnung läßt zusammenfassend folgende Vorteile erkennen:
- kompakte Bauweise, die sich in das vorhandene Rahmensystem integrieren läßt.
- gutes Dämpfungsverhalten der gekapselten Feder.
- ausgeprägte Progression der Federkennlinie, die der Fahrstabilität zugute kommt und
- leichte Anpaßbarkeit an variable Gewichte und Federwege.

## Patentansprüche

1. Federanordnung für einen Rollstuhl, bestehend aus einem Federelement (7), welches einerseits über eine Stütze (3) mit dem Rahmen (1) des Rollstuhls und andererseits über eine Lagerstütze (5) mit der Radachse (6) in Verbindung steht, dadurch gekennzeichnet, daß sowohl die rahmenseitige Stütze (3) als auch die achslagerseitige Stütze (5) rohrförmige Teile und wie auch das Federelement (7) koaxial zu einer an Rahmenschenkeln (1) befestigten Führungsstange (2) angeordnet sind, wobei die achslagerseitige Stütze (5) axial beweglich und durch formschlüssige Verbindung mit der Führungsstange drehunbeweglich ist und die übereinander angeordneten Stützen das in einer topfförmigen Erweiterung (8) der rahmenseitigen Stütze (3) aufgenommene Federelement (7) einschließen.

2. Federanordnung nach Anspruch 1, dadurch gekennzeichnet, daß das Federelement (7) ein Teil aus einem zelligen Polyurethan-Elastomer ist.

3. Federanordnung nach Anspruch 1 bis 2, dadurch gekennzeichnet, daß die Führungsstange (2) zur Bildung eines Anschlags für die achslagerseitige Stütze (5) eine Abstufung (4) aufweist, die mit einem elastischen Ring (11) belegt ist, und die achslagerseitige Stütze mit einem entsprechenden inneren Vorsprung (10) versehen ist.

## Claims

1. A spring arrangement for a wheelchair, comprising a spring element (7) which is connected on the one hand via a support (3) to the frame (1) of the wheelchair and on the other hand via a bearing support (5) to the wheel axle (6), wherein both the support (3) on the frame side and the support (5) on the axle bearing side are tubular parts and, like the spring element (7), are arranged coaxially with respect to a guide rod (2) fastened on frame members (1), the support (5) on the axle bearing side being axially movable and rotationally immovable due to positive connection to the guide rod, and the superposed supports enclosing the spring element (7) received in a pot-shaped widening (8) of the support (3) on the frame side.

2. The spring arrangement as claimed in claim 1, wherein the spring element (7) is a part comprising a cellular polyurethane elastomer.

3. The spring arrangement as claimed in claim 1 or 2, wherein the guide rod (2) has for forming a stop for the support (5) on the axle bearing side a step (4) which is covered by a flexible ring (11), and the support on the axle bearing side is provided with a corresponding inner projection (10).

## Revendications

1. Dispositif à ressort pour un fauteuil roulant, constitué d'un élément à ressort (7) qui, est en liaison d'une part, avec le cadre (1) du fauteuil par l'intermédiaire d'un support (3) et, d'autre part, avec l'essieu (6) par l'intermédiaire d'un support de palier (5), caractérisé par le fait qu'aussi bien le support (3) côté cadre que le support (5) côté palier sont des éléments tubulaires et sont montés, de même que l'élément à ressort (7), coaxialement à une tige conductrice (2) fixée sur les parties verticales du cadre (1), le support (5) côté palier étant mobile en direction axiale, mais immobile dans le sens rotatoire grâce à une connexion commandée mécaniquement avec la tige conductrice, et les supports placés l'un au-dessus de l'autre incluant l'élément à ressort (7) pris dans un élargissement (8) en forme de pot du support côté cadre (3).

2. Dispositif à ressort selon la revendication 1, caractérisé par le fait que l'élément à ressort (7) constitue une partie d'un élastomère de polyuréthane cellulaire.

3. Dispositif à ressort selon l'une des revendications 1 et 2, caractérisé par le fait qu'en vue de former une butée pour le support (5) côté palier, la tige conductrice (2) présente une gradation (4) avec bague élastique (11) et le support côté palier présente une saillie intérieure adéquate (10).
